# FASCICULE DE BREVET EUROPEEN

(11) **EP 2 134 033 B1**
(45) Date de publication et mention de la délivrance du brevet: **12.01.2011**
(21) Numéro de dépôt: 09159875.5
(22) Date de dépôt: 11.05.2009
(51) Int. Cl.: H04L 12/24

(54) **Mécanisme de tolérance aux fautes optimisé pour réseau pair-à-pair**
Fehlertolerierendes Verfahren optimiert für Peer to Peer Netzwerke
Fault-tolerant mecanism optimised for peer to peer network

(30) Priorité: 11.06.2008 FR 0853867
(43) Date de publication de la demande: 16.12.2009
(73) Titulaire: Alcatel Lucent, 75008 Paris (FR)
(72) Inventeur: Tombroff, Dimitri, 91620, NOZAY (FR); De Rop, Pierre, 91620, NOZAY (FR)
(74) Mandataire: Chaffraix, Sylvain

(56) Documents cités:
- EP-A- 1 553 747
- US-A1- 2007 230 482
- ION STOICA: "Chord: A Scalable Peer-to-peer Lookup Service for Internet Applications" PROCEEDINGS OF ACM SIGCOMM, XX, XX, 1 janvier 1900 (1900-01-01), page complete, XP002332182

## Description

La présente invention est relative au déploiement d'un réseau pair-à-pair sur un ensemble d'équipements de traitement. Elle concerne plus particulièrement l'utilisation de ces réseaux pair-à-pair pour des applications de télécommunication.

Il est connu de distribuer certaines applications de télécommunication notamment sur un ensemble de noeuds de traitement. De cette façon, chaque noeud ne traite qu'une partie des requêtes adressées à l'application et il est possible de dimensionner de façon éventuellement dynamique le nombre de noeuds en fonction des ressources nécessaires pour traiter ces requêtes. Une telle architecture permet également de facilement rendre l'application tolérante aux fautes du fait de la redondance inhérente des noeuds entre eux.

Pour certaines applications se pose toutefois le problème de la localisation d'informations contextuelles au sein de cet ensemble de noeud. En effet, certaines applications comme un élément de signalisation peuvent nécessiter la mémorisation d'un contexte entre deux messages qui lui sont adressés. Ce contexte peut permettre de traiter un message suivant de façon appropriée. C'est le cas d'un élément de signalisation SIP ou « proxy SIP » qui doit traiter une requête en fonction du statut de la session SIP (pour « Session Initiation Protocol »)

Pour ce type d'applications il est nécessaire d'une part de mémoriser ces informations contextuelles mais également de pouvoir les localiser au moment opportun.

Une approche possible consiste à disposer d'une base de données centralisée à laquelle chacun des noeuds a accès et peut mémoriser et récupérer les informations contextuelles des sessions qu'ils gèrent.

Cependant, lorsque cette base de données centralisée est implémentée sur un disque dur ou sur un support matériel équivalent, le temps d'accès aux informations devient pénalisant et rend cette solution inadéquate aux applications demandant des temps de réponse très courts comme les applications de télécommunication.

Implémenter la base de données en mémoire permet de s'affranchir de ce problème du temps d'accès mais la nécessité d'incorporer de la redondance pour répartir la charge des accès et pour satisfaire les contraintes de tolérance aux fautes rend le système complexe. Il s'agit en fait de constituer un réseau de bases distinct de l'ensemble de noeuds de traitement. Outre qu'une telle approche ne semble intellectuellement pas très satisfaisante, elle engendre des problèmes de configuration et n'est ni souple ni aisée à gérer.

Les réseaux pair-à-pair permettent, par l'utilisation d'une table de hachage distribuée, de résoudre ces problèmes d'une façon automatique et transparente pour le développeur de l'application et. pour les dispositifs extérieurs à l'application et devant communiquer avec elle.

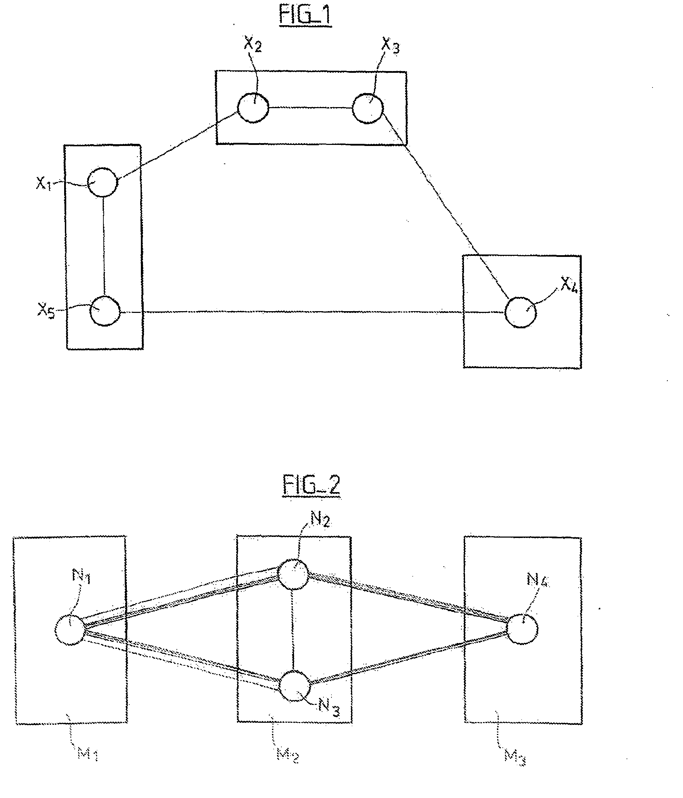

La figure 1 schématise un réseau pair-à-pair composé de N noeuds X1, X2, X3, X4... XN.

Les informations contextuelles à mémoriser sont associées à des clés qui sont distribués sur cet ensemble de noeud. Généralement, cette distribution est effectuée par une fonction de hachage qui permet de projeter l'espace des clés vers l'espace des noeuds tout en obtenant une bonne répartition de la charge parmi ces noeuds.

Les informations contextuelles peuvent être retrouvées à partir de la clé. L'application de la même fonction de hachage permet de déterminer le noeud associé à cette clé puis de récupérer les informations stockées sur ce noeud et associées à la clé.

Afin de rendre le système tolérant aux fautes, il est généralement prévu que chaque association entre une clé et des informations contextuelles soit répliquée sur un second noeud. De cette façon, si le premier noeud ne fonctionne plus, les informations contextuelles peuvent être récupérées depuis ce second noeuds.

Un algorithme simple et communément utilisé pour déterminer quel noeud doit mémoriser la copie des informations contextuelles consiste à choisir le successeur, c'est-à-dire le noeud suivant l'ordre du réseau pair-à-pair. L'intérêt d'un tel choix est qu'en cas de défaillance d'un noeud, la localisation de la copie des informations contextuelles est immédiate. On évite ainsi une période d'incertitude à la suite d'une défaillance, nécessitant une procédure supplémentaire pour correctement gérer cette période sans risquer de répondre de façon erronée a une requête.

Ainsi, si la fonction de hachage appliquée à la clé recherchée désigne le noeud X2 et que celui-ci n'est plus accessible ou ne contient plus l'information à la suite d'un dysfonctionnement, le système détermine automatiquement qu'une copie des informations contextuelles recherchées se trouve dans le noeud X3.

Ces implémentations d'un réseau pair-à-pair sont davantage expliquées dans l'article « Chord: A Scalable Peer-to-peer Lookup Service for Internet Applications » de lan Stoica, Robert Morris, David Karger, M. Frans Kaashoek et Hari Balakrishnan, ACM SIGCOMM 2001, San Diego, CA, August 2001, pp. 149-160, ainsi que dans la demande de brevet américain US2007/230482.

Toutefois, en pratique, le problème technique de la tolérance aux fautes continue de se poser. En effet, les réseaux pair-à-pair sont en pratique déployés sur des réseaux d'équipements de traitement. Ces équipements étant de plus en plus puissants, il est avantageux de déployer plusieurs noeuds sur un même équipement. Dans l'exemple de la figure 1, les noeuds X2 et X3 sont situés sur l'équipement M2, les noeuds X1 et XN sont situés sur l'équipement M1 et le noeud X4 est situé sur l'équipement M3.

Par conséquent, si un équipement de traitement subit un dysfonctionnement, les noeuds présents peuvent être impactés et ne plus fonctionner. Ainsi, si l'équipement de traitement M2 subit une panne, les deux noeuds X2 et X3 ne fonctionnent plus.

Or, selon l'algorithme classique consistant à localiser la copie des informations sur le noeud successeur, les informations mémorisées sur le noeud X2 sont dupliquées sur le noeud X3. Par conséquent, malgré le mécanisme de tolérance aux pannes de l'état de la technique, les informations contextuelles associées au noeud ne sont plus disponibles.

L'état de la technique est donc inadéquat pour procurer une tolérance aux pannes suffisante. Lé but de la présente invention est de pallier cette insuffisance en améliorant la gestion d'un réseau pair-à-pair.

Pour ce faire l'invention a pour premier objet un dispositif de gestion d'un réseau pair-à-pair composé d'un ensemble de noeuds répartis parmi un ensemble d'équipements de traitement et organisé sous une forme circulaire de sorte que chaque noeud possède un unique noeud successeur. Le dispositif de gestion comporte des moyens d'admission (ou composant d'admission) pour insérer un nouveau noeud au sein du réseau pair-à-pair. Il se caractérise en ce que les moyens d'admission sont en outre prévus pour déterminer un couple de noeuds adjacent déployés sur un même équipement de traitement et pour insérer ce nouveau noeud entre les deux noeuds du couple ainsi déterminé.

Les moyens d'admission peuvent par exemple être un composant d'admission mis en oeuvre par un dispositif distinct desdits noeuds, ou un composant d'admission implémenté par tout ou partie des noeuds du réseau pair-à-pair.

L'invention a également pour objet un élément de communication comportant au moins une interface avec un réseau de communication contenant d'autres éléments de communication, et un réseau pair à pair pour le traitement de requêtes provenant de ces autres éléments de communication. Le réseau pair-à-pair est constitué de noeuds répartis parmi un ensemble d'équipements de traitement et organisés sous une forme circulaire de sorte que chaque noeud possède un unique noeud successeur. Ce réseau pair-à-pair est en outre associé à un dispositif de gestion comportant des moyens d'admission pour insérer un nouveau noeud au sein du réseau pair-à-pair.

L'élément de communication selon l'invention est prévu pour que des informations contextuelles utilisés pour le traitement des requêtes sont mémorisés dans les noeuds, et il se caractérise en ce que les moyens d'admission sont en outre prévus pour déterminer un couple de noeuds adjacents déployés sur un même équipement de traitement et pour insérer ce nouveau noeud entre les deux noeuds du couple en question.

Les informations contextuelles peuvent être dupliquées dans les noeuds successeurs.

Les moyens d'admission peuvent par exemple être un composant d'admission mis en oeuvre par un dispositif distinct desdits noeuds, ou un composant d'admission implémenté par tout ou partie des noeuds du réseau.

L'interface avec un réseau de communication peut être apte à transmettre des messages de signalisation conformes au protocole SIP.

L'invention apparaîtra de façon plus claire dans la description qui va suivre en liaison avec les figures annexées.
La figure 1, précédemment commentée, schématise un réseau pair-à-pair, conforme à l'état de la technique.
La figure 2 schématise un réseau pair-à-pair déployé sur un ensemble d'équipements de traitement, conformément à l'invention.
Les figures 3a et 3b illustrent la répartition des informations mémorisés dans le réseau pair-à-pair.
La figure 4 illustre un élément de communication selon l'invention.

Il sera tout d'abord décrit le réseau pair-à-pair et le dispositif de gestion, puis leur application au sein d'un élément de communication.

La figure 2 représente un réseau pair-à-pair déployé sur un réseau constitué de 3 équipements de traitement M1, M2, M3. Le réseau pair-à-pair est constitué d'un ensemble de noeuds N1, N2, N3 et N4 organisés sous une forme circulaire de sorte que chaque noeud possède un unique noeud successeur (et un unique noeud prédécesseur).

A ce réseau pair à pair est adjoint un dispositif de gestion comportant notamment des moyens d'admission. Ces moyens d'admission sont responsables de l'insertion d'un nouveau noeud au sein du réseau pair-à-pair. Une propriété essentielle des réseaux pair-à-pair est en effet d'être évolutif, au sens que des noeuds peuvent être ajoutés ou retirer à tout moment et que le réseau doit être prévu pour s'auto-organiser.

Si l'on suppose que le réseau est à un moment constitué des noeuds N1, N2, N3, l'admission du nouveau noeud N4 comprend la détermination de l'emplacement de noeud entrant au sein du réseau déjà constitué, ainsi que la détermination d'une nouvelle répartition des clés dans l'ensemble des noeuds. Cette répartition permet notamment de répartir la charge en tirant profit de l'apport des nouveaux noeuds en ressources de traitement et de stockage.

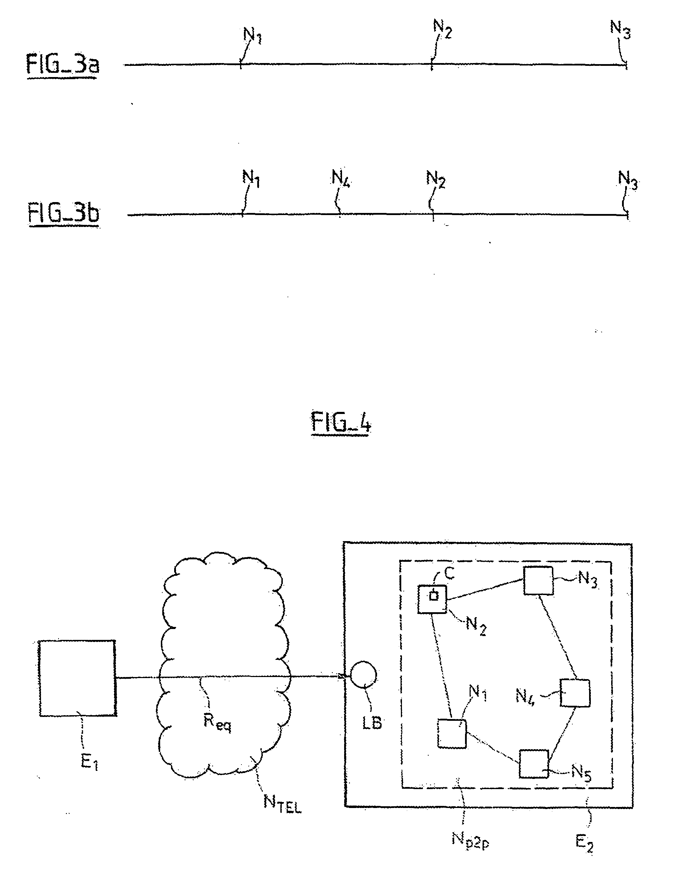

Les figures 3a et 3b illustrent de façon plus claire la détermination d'une nouvelle répartition des clés.

Chaque ligne horizontale représente l'espace des clés. On place sur ces lignes les noeuds présents dans le réseau Chacun de ces noeuds est associé à un sous-ensemble de clés, correspondant aux clés qu'il mémorise.

La figure 3a correspond à une première situation dans laquelle le réseau est composé des noeuds N1, N2 et N3. Chacun des noeuds mémorise un sous-ensemble correspond au tiers de l'ensemble total des clés. Ce sous-ensemble correspond, sur la figure 3a, à la partie de la ligne horizontale située à sa gauche et bornée par le noeud précédent ou par le début de la ligne.

Lorsque le noeud N4 est à ajouter au réseau pair-à-pair, les moyens d'admission déterminent l'emplacement qu'il doit prendre au sein du réseau ainsi que la répartition des clés.

La localisation du déploiement d'un noeud sur un équipement de traitement M1, M2, M3, M4 peut être déclenchée par les moyens d'admission, mais la détermination de cette localisation est classiquement prise en charge par d'autres modules du système de gestion. Par exemple, il peut être prévu que cette localisation soit déterminée par le système d'exploitation sous-jacent, sans que les moyens d'admission aient les moyens de la contrôler.

Les moyens d'admission sont un composant d'admission qui peut être mis en oeuvre par un dispositif distinct des noeuds du réseau pair-à pair. Mais il peut également être implémenté par tout ou partie de ces noeuds. Ainsi, un nouveau noeud entrant peut s'adresser soit à n'importe quel noeud déjà membre du réseau, ou à certains de ces noeuds jouant un rôle particulier d'admission.

Selon l'invention, le composant d'admission est prévu pour déterminer un couple de noeuds adjacent déployés sur un même équipement déterminer un couple de noeuds adjacent déployés sur un même équipement de traitement. Deux noeuds sont adjacents si l'un est le successeur de l'autre au sein du réseau pair-à-pair. Par exemple, dans le cas du réseau formé des noeuds. Si l'on suppose que le réseau est à un moment constitué des noeuds N1, N2, N3, les noeuds N1 et N2 sont adjacents, les noeuds N2 et N3 sont adjacents et les noeuds N1 et N3 sont adjacents. Les noeuds N2 et N3 forment le seul couple de noeuds adjacents déployés sur un même équipement de traitement, M2.

Le composant d'admission est prévu pour alors insérer le nouveau noeud N4 entre les deux noeuds de ce couple N2, N3.

Le nouveau réseau pair-à-pair forme un cercle contenant les noeuds ordonnés N1, N2, N4 et N3. Ainsi, le couple de noeuds adjacents N2, N3 est rompu et il n'y a plus de couples de noeuds adjacents déployés sur un même équipement de traitement. D'une façon plus générale, l'admission d'un nouveau noeud permet de diminuer d'une unité le nombre de ces couples.

Dans le cas où il n'existerait pas de couples de ce type, la composition d'admission peut fonctionner selon l'état de la technique et par exemple insérer le nouveau noeud entre le dernier noeud et le premier noeud du cercle formé par le réseau.

Sur la figure 3b figure le noeud N4, ajouté entre les noeuds N2 et N3. Le réseau pair-à-pair s'auto-configure de sorte que le sous-ensemble de clés précédemment associé au noeud N3 est divisé en deux parties, la partie la plus à gauche étant associée au nouveau noeud N4, et la partie la plus à droite restant associée au noeud N3. Ces deux parties sont sensiblement de taille identique.

La partie de clés nouvellement associée au noeud N4 est transférée depuis le noeud N3 vers ce nouveau noeud. Avec ces clés sont également transférées les informations qui leur sont associées. Ces informations peuvent être des informations contextuelles dans le cas d'une application à un élément de communication comme il sera décrit plus bas.

Pour assurer la tolérance aux fautes du réseau pair-à-pair, les informations (contextuelles) sont dupliquées sur le noeud successeur. Le noeud successeur est le noeud suivant dans l'ordre circulaire du réseau N1, N2, N4, N3.

Grâce à la façon dont les nouveaux noeuds sont insérés dans le réseau pair-à-pair, le successeur de chaque noeud n'est pas situé sur le même équipement de traitement que celui-ci.

Ainsi, le successeur du noeud N2 est désormais le noeud N4 qui est déployé sur l'équipement de traitement M3.

Si l'équipement de traitement M2 subit un dysfonctionnement, le noeud N4, situé sur l'équipement M3 peut fournir la copie des informations du noeud N2, et le noeud N1, situé sur l'équipement M1, peut fournir la copie des informations du noeud N3.

Le problème posé par les noeuds N2 et N3 dans l'état du réseau précédent l'admission du noeud N4 est donc résolu.

La figure 4 illustre l'application d'un réseau pair-à-pair selon l'invention à un élément de communication. Celui-ci peut être un serveur d'applications dans une architecture de communication, telle une architecture IMS (« *IP Multimedia Subsystem* »). Il peut aussi être un élément de signalisation, tel un proxy conforme au protocole SIP (« *Session Invitation* Protocol ») tel que spécifié par le RFC 3261 de l'IETF, ou une fonction CSCF (« *Call Session Control Function* ») au sein d'une architecture IMS.

Cet élément de communication E₂ possède des moyens de réception d'une requête Req provenant d'un autre élément E₁ à travers un réseau de communication N_{TEL·} La requête Req est traitée par un module de répartition de charge L8, destiné à déterminer, pour chaque première requête d'une session de communication, quel noeud N1, N2, N3, N4, N5 doit traiter la requête. Ces noeuds forment un réseau pair-à-pair Nₚ₂ₚ tel que décrit précédemment.

Le traitement de la requête peut produire la génération d'informations contextuelles qui peuvent être utiles ou nécessaires pour le traitement d'une autre requête appartenant à la même session. Elles sont donc associées à une clé, et mémorisées sur le noeud correspondant à cette clé.

L'association est effectuée par une fonction de hachage appliquée à un identifiant de la session (par exemple, adresses IP de l'élément de communication émetteur E₁, entête «call ID» de la requête SIP, etc.). Le résultat de cette fonction de hachage peut donner directement le numéro du noeud modulo le nombre de noeuds dans le réseau. Ces différents mécanismes sont connus de l'état de la technique et ne sont pas décrits en détail dans cette demande de brevet. L'article précédemment mentionné et concernant le mécanisme « Chord » peut être consulté pour obtenir certains de ces détails.

Dans l'exemple de la figure 4, les informations contextuelles C sont mémorisées dans le noeud N₂. Elles sont dupliquées dans son successeur, le noeud N₃. Comme nous avons vu précédemment, le module d'admission du dispositif de gestion du réseau pair-à-pair Nₚ₂ₚ a fait en sorte que les noeuds adjacents N₂ et N₃ ne soient pas déployés sur un même équipement de traitement.

De cette façon, les prochaines requêtes appartenant à la même session pourront être traitées en récupérant les informations textuelles présentes sur le noeud N₂, et en cas de défaillance de celui-ci, sur le successeur, le noeud N₃.

Les deux N₂ et N₃ n'étant pas sur le même équipement de traitement, la probabilité que ceux-ci sont défaillants simultanément est très faible.

L'invention permet donc de résoudre le problème technique, sans changer fondamentalement les mécanismes connus de gestion du réseau pair-à-pair.

## Revendications

1. Dispositif de gestion d'un réseau pair-à-pair composé d'un ensemble de noeuds (N1, N2, N3, N4) répartis parmi un ensemble d'équipements de traitement (M1, M2, M3) et organisé sous une forme circulaire de sorte que chaque noeud possède un unique noeud successeur, ledit dispositif de gestion comportant des moyens d'admission pour insérer un nouveau noeud au sein dudit réseau pair-à-pair et étant **caractérisé en ce que** lesdits moyens d'admission sont en outre prévus pour déterminer un couple de noeuds adjacents déployés sur un même équipement de traitement et pour insérer ledit nouveau noeud entre les deux noeuds dudit couple.

2. Dispositif de gestion selon la revendication précédente, dans lequel lesdites moyens d'admission sont un composant d'admission mis en oeuvre par un dispositif distinct desdits noeuds.

3. Dispositif de gestion selon la revendication précédente, dans lequel lesdits moyens d'admission sont un composant d'admission implémenté par tout ou partie desdits noeuds.

4. Elément de communication (E₂) comportant au moins une interface avec un réseau de communication (N_{TEL}) contenant d'autres éléments de communication (E₁), et un réseau pair à pair (Nₚ₂ₚ) pour le traitement de requêtes (Req) provenant desdits autres éléments de communication, ledit réseau pair-à-pair étant constitué de noeuds (N₁, N₂, N₃, N₄, N₅) répartis parmi un ensemble d'équipements de traitement et organisés sous une forme circulaire de sorte que chaque noeud possède un unique noeud successeur, et incluant un dispositif de gestion comportant des moyens d'admission pour insérer un nouveau noeud au sein dudit réseau pair-à-pair, ledit élément de communication étant prévu pour que des informations contextuelles utilisées pour le traitement desdites requêtes soient mémorisées dans lesdites noeuds et **caractérisé en ce que** lesdits moyens d'admission sont en outre prévus pour déterminer un couple de noeuds adjacents déployés sur un même équipement de traitement et pour insérer ledit nouveau noeud entre les deux noeuds dudit couple.

5. Elément de communication selon la revendication précédente, dans lequel lesdites informations contextuelles sont dupliquées dans les noeuds successeurs.

6. Elément de communication selon l'une des revendications 4 ou 5, dans lequel lesdits moyens d'admission sont un composant d'admission mis en oeuvre par un dispositif distinct desdits noeuds.

7. Elément de communication selon l'une des revendications 4 ou 5, dans lequel lesdits moyens d'admission sont un composant d'admission implémenté partout ou partie desdits noeuds.

8. Elément de communication selon l'une des revendications 4 à 7 dans lequel ladite interface avec un réseau de communication est apte à transmettre des messages de signalisation conformes au protocole SlP.

## Claims

1. A management device for a peer-to-peer network comprising a set of nodes (N1, N2, N3, N4) distributed among a set of processing devices (M1, M2, M3) and arranged in a circle so that each node has a single successor node, said management device comprising intake means for inserting a new node into said peer-to-peer network and **characterized in that** said intake means are also configured to determine a pair of adjacent nodes deployed on the same processing device and to insert said new node between the two nodes of said pair.

2. A management device according to the previous claim, wherein said intake means are an intake component implemented by a different device from said nodes.

3. A management device according to the previous claim, wherein said intake means are an intake component implemented by all or some of said nodes.

4. A communication element (E₂) comprising at least one interface with a communication network (N_{TEL}) containing other communication elements (E₁), and a peer-to-peer network (Nₚ₂ₚ) for processing requests (Req) coming from said other communication elements, said peer-to-peer network (N₁, N₂, N₃, N₄, N₅) distributed among a set of processing devices arranged in a circle so that each node has a single successor node, and including a management device comprising intake means for inserting a new node into said peer-to-peer network, said communication element being configured so that contextual information used to process said requests is saved in said nodes, and **characterized in that** said intake means are further configured to determine a pair of adjacent nodes deployed on the same processing device and to insert said new node between the two nodes of said pair

5. A communication element according to the previous claim, wherein said contextual information is duplicated in the successor nodes.

6. A communication element according to one of claims 4 or 5, wherein said intake means are an intake component implemented by a different device from said nodes.

7. A communication element according to one of claims 4 for 5, wherein said intake means are an intake component implemented by all or some of said nodes.

8. A communication element according to one of claims 4 to 7, wherein said interface with a communication network is suitable for sending signaling messages compliant with the SIP protocol.

## Patentansprüche

1. Vorrichtung zur Verwaltung eines Peer-to-Peer-Netzwerks, welches aus einem Satz von unter einem Satz von Verarbeitungseinrichtungen (M1, M2, M3) verteilten Knoten (N1, N2, N3, N4) besteht, welcher derart kreisförmig organisiert ist, dass jeder Knoten einen einzigen Nachfolgerknoten hat, wobei die besagte Verwaltungsvorrichtung Einlassmittel zum Einfügen eines neuen Knotens innerhalb des besagten Peer-to-Peer-Netzwerks umfasst und **dadurch gekennzeichnet ist, dass** die besagten Einlassmittel weiterhin dazu vorgesehen sind, ein auf einer selben Verarbeitungseinrichtung angeordnetes benachbartes Knotenpaar zu bestimmen und den besagten neuen Knoten zwischen den beiden Knoten des besagten Knotenpaars einzufügen.

2. Verwaltungsvorrichtung nach dem vorstehenden Anspruch, wobei die besagten Einlassmittel eine von einer Vorrichtung, welche sich von den besagten Knoten unterscheidet, eingesetzte Einlasskomponente sind.

3. Verwaltungsvorrichtung nach dem vorstehenden Anspruch, wobei die besagten Einlassmittel eine von allen oder von einem Teil der besagten Knoten implementierte Einlasskomponente sind.

4. Kommunikationselement (E₂), welches mindestens eine Schnittstelle mit einem Kommunikationsnetzwerk (N_{TEL}), welches weitere Kommunikationselemente (E₁) enthält, und ein Peer-to-Peer-Netzwerk (Nₚ₂ₚ) für die Bearbeitung von Anforderungen (Req), welche von den besagten weiteren Kommunikationselementen stammen, umfasst, wobei das besagte Peer-to-Peer-Netzwerk aus Knoten (N₁, N₂, N₃, N₄ N₅) besteht, welche unter einem Satz von Verarbeitungseinrichtungen verteilt und derart kreisförmig organisiert sind, dass jeder Knoten einen einzigen Nachfolgerknoten hat, umfassend eine Verwaltungsvorrichtung mit Einlassmitteln zum Einfügen eines neuen Knotens innerhalb des besagten Peer-to-Peer-Netzwerks, wobei das besagte Kommunikationselement dafür vorgesehen ist, dass die für die Verarbeitung der besagten Anforderungen verwendeten kontextbezogenen lnformationen in den besagten Knoten gespeichert werden, und **dadurch gekennzeichnet, dass** die besagten Einlassmittel weiterhin dazu vorgesehen sind, ein auf einer selben Verarbeitungseinrichtung angeordnetes benachbartes Knotenpaar zu bestimmen und den besagten neuen Knoten zwischen den beiden Knoten des besagten Knotenpaars einzufügen.

5. Kommunikationselement nach dem vorstehenden Anspruch, wobei die besagten kontextbezogenen Informationen auf die Nachfolgerknoten kopiert werden.

6. Kommunikationselement nach einem der Ansprüche 4 oder 5, wobei die besagten Einlassmittel eine Einlasskomponente sind, welche von einer sich von den besagten Knoten unterscheidenden Vorrichtung eingesetzt wird.

7. Kommunikationselement nach einem der Ansprüche 4 oder 5, wobei die besagten Einlassmittel eine Einlasskomponente sind, welche von allen oder von einem Teil der besagten Knoten implementiert wird.

8. Kommunikationselement nach einem der Ansprüche 4 bis 7, wobei die besagte Schnittstelle mit einem Kommunikationsnetzwerk fähig ist, die Signalisierungsnachricht gemäß dem SIP-Protokoll zu übertragen.
